# EUROPEAN PATENT SPECIFICATION

(11) **EP 1 268 928 B1**
(45) Date of publication and mention of the grant of the patent: **14.11.2007**
(21) Application number: 01920943.6
(22) Date of filing: 02.02.2001
(51) Int. Cl.: D21H 17/07, D21H 17/14, C08G 73/02

(54) **AQUEOUS POLYAMINOAMIDE AND SURFACTANT COMPOSITION FOR PAPERMAKING**
WÄSSRIGE ZUSAMMENSETZUNG AUS POLYAMIDOAMINEN UND TENSIDEN ZUR PAPIERHERSTELLUNG
COMPOSITION AQUEUSE A BASE DE POLYAMINOAMIDES ET DE TENSIOACTIFS DESTINEE A LA FABRICATION DE PAPIER

(30) Priority: 10.02.2000 US 501439
(43) Date of publication of application: 02.01.2003
(73) Proprietor: NALCO CHEMICAL COMPANY, Naperville Illinois 60563-1198 (US)
(72) Inventor: HOWLAND, Christopher, P., St. Charles, IL 60175 (US); BEGALA, Arthur, J., Naperville, IL 60540 (US); SANDS, Bruce, W., Montgomery, AL 36117 (US); BAILLIF, Randy, D., Wetumpka, AL 36093 (US)
(74) Representative: Harrison Goddard Foote
(86) International application number: PCT/US2001/040012
(87) International publication number: WO 2001/059213

(56) References cited:
- WO-A-98/54411
- US-A- 2 772 969
- US-A- 5 393 334
- PATENT ABSTRACTS OF JAPAN vol. 0130, no. 61 (C-567), 10 February 1989 (1989-02-10) & JP 63 252536 A (SHISEIDO CO LTD), 19 October 1988 (1988-10-19)

## Description

### TECHNICAL FIELD

This invention concerns compositions for use in papermaking and methods of using the compositions in a papermaking process to produce paper having enhanced optical and dimensional properties.

### BACKGROUND OF THE INVENTION

The process of paper manufacture is a dynamic process in which a wide range of additives are introduced to a slurry of pulp to produce a sheet with desired physical properties. Each additive is selected to impart a desired property to the paper sheet, resulting from the additive's own physical properties, or the additive's interaction with other slurry components to produce a desired property. For example, the sheet optical properties of brightness (reflection of incidental light from sheet surface) and opacity (refraction and/or diffusion of incidental light) and are important features which may determine the market value of the sheet.

The use of inorganic pigments and/or fillers is well know in the art. Specifically, titanium dioxide powder is sometimes used by the papermaker to achieve sheet optical properties. Although titanium dioxide provides the useful property enhancing sheet opacity and brightness, its use is often limited by its high cost and difficulty in handling, introduction, and retention into the pulp slurry.

Additionally, kaolin clay has also been used as alternate pigment/filler in papermaking to improve the sheet properties. Calcined kaolin clay is typically suspended in an aqueous dispersion via continuous agitation prior to introduction into the pulp slurry. Without appropriate dispersion of the kaolin particles using both mechanical and chemical dispersion stabilization techniques, the particles are subject to quick agglomeration and sedimentation resulting in nonuniform paper sheet properties and sheet defects.

Further, the aforementioned inorganic pigments and fillers are difficult to retain in the forming paper sheet. Large density gradients between the pulp fibers and the inorganic minerals such as titanium dioxide and clays often lead to gravitational migration of these minerals out of the forming web during the dewatering process of the forming paper sheet. Non-retained minerals travel out of the sheet during dewatering, sometimes depositing in the paper machine wire fabric, causing significant paper machine downtime. Charged polymers commonly known as coagulants and/or flocculants may be added to improve retention of these minerals in the forming sheet, but such practice increases the complexity and expense of the papermaking process. More ideally, the composition imparting the intended sheet property should be self-retaining in the forming sheet. Further, the ideal composition would be of a density more similar to that of the suspended fiber slurry thereby reducing the effect of selective migration of the sheet property functional additive during the sheet dewatering process and resulting in more uniform paper sheet property profile across the axis normal to that of the papermachine direction.

U. S. Patent No. 2,772,969 discloses a method for the production of sized paper by contacting cellulosic fibers with hydrophilic, colloidal, cationic sizing agents which comprise long chain fatty acid-polyalkylamine reaction products showing high sizing efficiency and the ability to produce sized cellulosic fibers under neutral and alkaline conditions.

Methods of enhancing the brightness, opacity and sizing using a composition comprising the mono-and difatty acid amide of aminoethylethanolamine and a surfactant are disclosed in U. S. Patent Nos. 5,292,363, 5,296,024 and 5,393,334. These compositions, although effective, are not as efficient as the aqueous dispersions described herein.

### SUMMARY OF THE INVENTION

In its principal aspect, this invention is directed to an aqueous dispersion comprising one or more polyaminoamides, wherein the polyaminoamide has formula 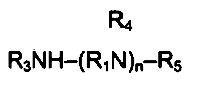 wherein R₂ is the hydrocarbon side chain of a saturated or unsaturated fatty acid; R₃, R₄ and R₅ are independently selected at each occurrence from H and R₂C(O)- and n is 2, 3, 4 or 5, provided that at least one of R₃, R₄ and R₅ are H and at least one of R₃, R₄ and R₅ are R₂C(O)-, one or more surfactants and water, wherein the dispersion has a pH of from 5 to 8 and the polyaminoamides are prepared by reacting one or more fatty acids with one or more polyamines of formula 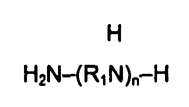 wherein R₁ is C₂-C₄ alkylene and n is 2, 3, 4 or 5.

Adding the aqueous dispersion of this invention to the pulp slurry during papermaking results in a uniform dispersion of the composition in said paper and improved sheet opacity and brightness. There is minimal regression of sheet mechanical properties such as sheet tensile and tear strength, and this invention requires a lower dosage than current organic sheet enhancing additives, for example the composition disclosed in U. S. Patent No. 5,296,024.

Accordingly, in another aspect, this invention is directed to a method of increasing opacity, bulk or brightness in a paper sheet comprising
a) adding to a pulp slurry of cellulose fibers an aqueous dispersion comprising one or more polyaminoamides, one or more surfactants and water,
   wherein the dispersion has a pH of from 5 to 8 and the polyaminoamides have formula 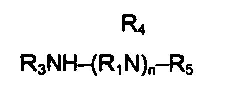 wherein R₂ is the hydrocarbon side chain of a saturated or unsaturated fatty acid; R₃, R₄ and R₅ are independently selected at each occurrence from H and R₂C(O)- and n is 2, 3, 4 or 5, provided that at least one of R₃, R₄ and R₅ are H and at least one of R₃, R₄ and R₅ are R₂C(O)-, and the polyaminoamides are prepared by reacting one or more fatty acids with one or more polyamines of formula 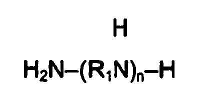 wherein R₁ is C₂-C₄ alkylene and n is 2,3,4 or 5; and
b) forming the slurry into the paper sheet.

### DETAILED DESCRIPTION OF THE INVENTION

### Definitions of Terms

"Polyamine means a compound of formula 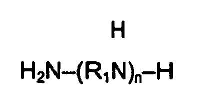 wherein R₁ is divalent straight or branched chain saturated hydrocarbon radical of from two to about four carbon atoms and n is 2, 3, 4 or 5. Preferred polyamines are those in which R₁ is ethylene, i. e. diethylenetriamine, triethylenetetramine, tetraethylenepentamine and pentaethylenehexamine. Triethylenetetramine is more preferred.

"Fatty acid" means a compound of formula

R₂-CO₂H

wherein R₂ is the hydrocarbon side chain of a saturated or unsaturated fatty acid. Preferably, R₂ is a straight chain hydrocarbon of from 13 to 22 carbon atoms. R₂ may contain one or more double bonds. Preferred fatty acids include behenic acid, stearic acid, myristic acid and oleic acid. Stearic acid is more preferred.

"Polyaminoamide" means a compound of formula 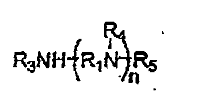 wherein R₃, R₄ and R₅ are independently selected at each occurrence from H and R₂C(O) - and n is 2, 3, 4 or 5, provided that at least one of R₃, R₄ and R₅ are H and at least one of R₃, R₄ and R₅ are R₂C(O)-. In a more preferred aspect, at least two of R₃, R₄ and R₅ are H and at least one of R₃, R₄ and R₅ are R₂C(O)-.

"Brightness" means the numerical value of the blue-light reflectance of white, near-white and naturally colored pulp, paper and paperboard. The higher the blue-light reflectance, generally the whiter the products will appear. Standard methods and apparatus for measuring brightness are described in the official Tappi test method T 452 om-98.

"Opacity" means the extent to which a single sheet of white or near-white paper hides printed matter on underlying sheets of similar paper. Standard methods and apparatus for measuring brightness are described in the official Tappi test method T 519 om-91.

"Bulk" means the specific volume of the paper sheet expressed as cm3/g and determined using Tappi official test method T 220 om-88.

### Preferred Embodiments

The polyaminoamide is prepared by reacting the polyamine and fatty, acid at high temperature, preferably from 149°C (300 °F) to 177°C (350 °F) until water evolution ceases. The polyamine starting material may be a single polyamine or a mixture of polyamines. Likewise, the fatty acid may also be a single compound or a mixtures of fatty acids. The resulting polyaminoamide is a hydrophobic cationic amide with a designed molecular structure having superior molecular dimensional-properties. The polyaminoamide is typically an amorphous solid or wax.

The aqueous dispersion of this invention is prepared by melting the polyaminoamide, generally at a temperature of from 93°C (200 °F) to 177° (250 °F) and then slowly adding one or more surfactants with stirring. The heat is then removed and hot water is added to achieve the desired concentration. The pH of the dispersion is then adjusted to about 5-8, preferably to 6-7 with a protic acid, preferably acetic acid. The resulting aqueous dispersion contains from 5 weight percent to 25 weight percent, preferably from 10 weight percent to 20 weight percent polyaminoamide.

The surfactant or surfactants are added to reduce the surface tension of the composition to insure adequate dispersion of the polyaminoamide. Surfactants suitable for preparing the aqueous dispersion of this invention contain polyoxyethylene as the polar group and have a HLB of from 11 to 16. If a mixture of surfactants is used, the surfactants are selected such that the mixture has a HLB of from 11 to 16. Representative surfactants include nonylphenol and dodecylphenol ethoxyates, tallow amine (TAM) ethoxylates, ethoxylated castor oil, ethoxylated stearates, tallates and oleates, C₉-C₁₁ primary alcohol ethoxylates, ethoxylated tridecyl alcohols, ethoxylated primary and secondary aliphatic alcohols, ethoxylated sorbitan alkylates, and the like. Preferred surfactants or surfactant mixtures have a HLB of about 14. Tallow amine ethoxylate is more preferred.

In a preferred aspect of this invention, the polyaminoamide has formula 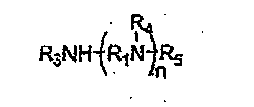 wherein R₂ is the hydrocarbon side chain of a saturated or unsaturated fatty acid; R₃, R₄ and R₅ are independently selected at each occurrence from H and R₂C(O)- and n is 2, 3, 4. or 5, provided that at least one of R₃, R₄ and R₅ are H and at least one of R₃, R₄ and R₅ are R₂C(O)-.

In another preferred aspect, at least two of R₃, R₄ and R₅ are H and at least one of R₃, R₄ and R₅ are R₂C(O)-.

In another preferred aspect, the polyaminoamide is prepared by reacting two molar equivalents of the fatty acids with one molar equivalent of the polyamines,

In another preferred aspect, the polyamines are selected from diethylenetriamine, triethylenetetramine. tetraethylenepentamine and pentaethylenehexamine,

In another preferred aspect, the fatty acid is selected from behenic acid, stearic acid, myristic acid and oleic acid.

In another preferred aspect, the polyamine is triethylenetetramine and the fatty acid is stearic acid.

In another preferred aspect, the aqueous dispersion has a pH of from 6 to 7.

In another preferred aspect, the surfactants contain a polyoxyethylene group as the polar group and have a HLB of from 11 to 16.

In another preferred aspect, the surfactants have a HLB of 14.

In another preferred aspect, the surfactant is tallow amine ethoxylate.

The dimensional properties of the resulting composition exhibit enhanced interfacial properties when added to a pulp slurry during the papermaking process. The resulting paper exhibits the enhanced sheet properties of brightness, opacity, and sheet bulk.

The pulp slurry is a slurry of cellulose fibers derived from chemical, mechanical or chemo-machanical treatments of substances containing cellulose fibers such as wood. This slurry may also contain recycled paper or paperboard products. The aqueous dispersion is added after the cellulose fibers have been sufficiently treated to make them ready for the papermaking process. For example, after they have been bleached to remove lignins and deinked if recycled paper pulp is being used. In general, the aqueous dispersion will be added to a thick stock (2-4 wt/wt percent) of the pulp slurry before dilution with recycled paper machine water or addition of inorganic filers.

The aqueous dispersion is added to the pulp slurry in an amount of from .045 (0.10) to 4.5 (10.0) active kg/m ton (lbs / ton), preferably from .136 (0.3) to 2.72 (6.0) active kg/m ton (lbs./ton). The preferred addition point is to the machine chest, before dilution of the thick stock with whitewater, where there is a contact time with the furnish components of at least about 10 minutes before the system is diluted.

The aqueous dispersion of this invention may be used along with conventional inorganic fillers, dyes and retention aid programs. The dispersion is preferably added to the pulp slurry before the addition of any additional papermaking additives.

In a preferred aspect, the aqueous dispersion is used in conjunction with one or more retention and drainge aids. The selection of the retention and drainage program will depend on the type of furnish being treated. In general each individual furnish is to some extent unique and the type and amount of retention/drainage aid required will be optimized by laboratory testing. For example the mill may be operating in an acid or alkaline condition which will control which inorganic fillers are used. Clay is generally used in acid while calcium carbonate is preferred in alkaline systems. Titanium dioxide will often be added to either type of system.

Representative retention and drainage programs used by those knowledgeable in papermaking may contain cationic coagulants such as the reaction product of epichlorohydrin with dimethylamine with or without added ammonia, ammonia - dichloroethane condensates, poly(ethyleneimine), poly(diallyldimethylammonium chloride or other suitably prepared cationic products. Inorganic coagulants such as alum or poly(aluminum chloride) may also be used separately or in conjunction with the above organic cationic coagulants. Frequently, cationic starch is also added to the furnish and will act as a cationic coagulant.

Cationic flocculants which may be used are usually selected from copolymers of acrylamide with dimethylaminoethylacrylate or dimethylaminoethyl methacrylate which have been quaternized with methylchloride. Also used are acrylamide copolymers with diallyldimethylammonium chloride.

Anionic flocculants which may be used can be selected from copolymers of acrylamide with acrylic acid (sodium salt) and acrylamidomethylpropane sulfonic acid (sodium salt).

The retention and drainage program may also use an anionic colloidal particle such as silica, bentonite or cross-linked acrylamide - acrylic acid polymers.

The foregoing may be better understood by the following Examples, which are presented for illustration and are not intended to limit the scope of the invention.

### Example 1

A representative polyaminoamide is prepared as follows :

Stearic acid (79.17 grams, Industrene B - an industrial grade which is a mixture of stearic and palmitic acids) is mixed with 20.83 grams of triethylenetetramine (TETA) and heated to 149°C (300 ° F). A slow nitrogen sparge is initiated with mixing and the reaction mixture is heated to 177°C (350 ° F) and held for four hours. The reaction mixture is then cooled. The product is the distearamide of triethylenetetramine as determined by NMR.

### Example 2

A representative aqueous dispersion according to this invention is prepared as follows:

The distearamide of Example 1 (110 g) is heated to 110°C-121°C (230 - 250° F) and a tallow amine ethoxylate dispersing agent (TAM-15, 5 g,) is added with mixing. The heat is removed and 880 grams of hot water are added slowly with mixing. After completion of the water addition, cooling is initiated and 5 grams of acetic acid are added to adjust the pH to 6 - 7. The resulting aqueous dispersion contains 11 wt % of the triethylenetetramine distrearamide.

### Example 3

The effectiveness of the aqueous dispersions of this invention is determined using a standard acid furnish prepared with and without added clay (kaolin #2 middle Georgia high brightness). Handsheets are prepared (using a British Sheet Mold) at varied levels of the aqueous dispersion and compared to handsheets prepared without the aqueous dispersion.

The fiber source for the sheets is a mixture of 80/20 wt/wt % hardwood/softwood kraft which is repulped from dry lap and beaten to a freeness of 350 - 370 CSF. This fiber furnish is then diluted to a concentration of 0.5 wt % with tap water and adjusted to pH 5.0 with dilute acetic acid. A clay slurry, at 0.5 wt % concentration, is also prepared. Handsheets are then made with a grammage of 65 grams/sq. meter containing varied levels of the organic modifier and clay. This is done by removing a given volume of the 0.5% fiber and substituting with the same volume of 0.5% clay.

The aqueous dispersion of this invention is added to the appropriate furnish with stirring 15 minutes before sheet formation and a retention program of alum, cationic starch and a cationic flocculant is added 1 minute prior to sheet formation. The handsheets are pressed and dried under standard Tappi conditions, T 205 om-88. Routinely, 7 sheets are made at each condition and averages taken of the optical and mechanical properties. The optical properties were measured on an Elrepho instrument using Tappi standard T519 to determine opacity. The results are shown in Table 1.

**Table 1**

| Effect of TETA Distrearamide on Sheet Opacity | | | |
|---|---|---|---|
| | Opacity | | |
| Clay Level % | 0 lb/ton | 2 lb/ton | 4 lb/ton |
| 0 | 76.7 | 77.0 | 77.3 |
| 5 | 78.8 | 78.8 | 79.1 |
| 10 | 80.9 | 81.2 | 81.5 |

As shown in Table 1, in each case whether with or without clay addition to the sheet there is measurable increase in the opacity of the handsheet produced. The laboratory data also show that the addition of 1 lb of clay would result in an opacity increase of 0.02065 units. Therefore, the TETA distearamide can be used to replace 15 to 30 lbs. of clay.

In a similar manner, a furnish from a newsprint machine containing 14.5% calcium carbonate ash is treated with the TETA distearamide composition of Example 2 at various dosages and handsheets are made. The brightness is determined as shown in Table 2.

**Table 2**

| Effect of TETA Distearamide on Sheet Brightness | | | |
|---|---|---|---|
| Brightness | | | |
| 0 lb/ton | 2 lb/ton | 4 lb/ton | 8 lb/ton |
| 49.03 | 49.54 | 49.65 | 50.33 |

### Example 3

The aqueous dispersion of this invention is compared to the composition of US Patent 5,292,363 as follows.

In a furnish containing 8.4 wt/wt % clay as described in Example 2 both theTETA distearamide of this invention and the stearamide of aminoethylaminoethanol (US Pat. 5,292,363)_are used to treat the furnish and opacities are measured. In order to obtain the same opacity increase produced by 1.45 lbs of the aqueous dispersion of this invention, 3.33 lbs were required of the composition of US Patent 5,292,363.

### Example 4

In a separate experiment the aqueous dispersion of TETA distearamide of this invention is used to treat an 80/20 HW/SWK furnish containing no filler. Rather than air drying (Tappi standard T -205 om-88) the handsheets produced, the sheets are dried on a drum dryer at 215 °F and then measured for opacity. The results are shown in Table X below .

**Table 3**

| Effect of TETA Distearamide on Heat-Dried Sheet Opacity | | | |
|---|---|---|---|
| | Opacity | | |
| Clay Level % | 0 lb/ton | 2lb/ton | 4 lb/ton |
| 0 | 75.1 | 78 | 80.89 |

In this case, heated drying appears to have a much greater effect on the increase in sheet opacity than that involved in air drying as shown in Table 1.

## Claims

1. An aqueous dispersion comprising one or more polyaminoamides, wherein the polyaminoamide has formula 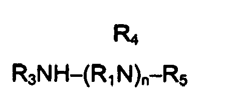 wherein R₂ is the hydrocarbon side chain of a saturated or unsaturated fatty acid; R₃, R₄ and R₅ are independently selected at each occurrence from H and R₂C(O)- and n is 2, 3, 4 or 5, provided that at least one of R₃, R₄ and R₅ are H and at least one of R₃, R₄ and R₅ are R₂C(O)-, one or more surfactants and water, wherein the dispersion has a pH of from 5 to 8 and the polyaminoamides are prepared by reacting one or more fatty acids with one or more polyamines of formula 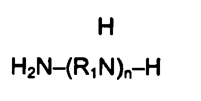 wherein R₁ is C₂-C₄ alkylene and n is 2, 3, 4 or 5.

2. The aqeuous dispersion of claim 1 wherein at least two of R₃, R₄ and R₅ are H and at least one of R₃, R₄ and R₅ are R₂C(O)-.

3. The aqueous dispersion of claim 1 or 2 wherein the polyaminoamide is prepared by reacting two molar equivalents of the fatty acids with one molar equivalent of the polyamines.

4. The aqueous dispersion of claim 1, 2 or 3 wherein the polyamines are selected from diethylenetriamine, triethylenetetramine, tetraethylenepentamine and pentaethylenehexamine.

5. The aqueous dispersion of any one of claims 1 to 4 wherein the fatty acid is selected from behenic acid, stearic acid, myristic acid and oleic acid.

6. The aqueous dispersion of any preceding claim wherein the polyamine is triethylenetetramine and the fatty acid is stearic acid.

7. The aqueous dispersion of any preceding claim wherein the surfactants contain a polyoxyethylene group as the polar group and have a HLB of from 11 to 16.

8. The aqueous dispersion of any one of claims 1 to 6 wherein the surfactant is tallow amine ethoxylate.

9. A method of increasing opacity, bulk or brightness in a paper sheet comprising adding the aqueous dispersion of any preceding claim to a pulp slurry of cellulose fibers and forming the slurry into the paper sheet.

## Patentansprüche

1. Wässrige Dispersion, die ein oder mehrere Polyaminoamide, wobei das Polyaminoamid die Formel 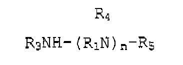 besitzt, worin R₂ die Kohlenwasserstoffseitenkette einer gesättigten oder ungesättigten Fettsäure ist, R₃, R₄ und R₅ bei jedem Auftreten unabhängig voneinander aus H und R₂C(O)- ausgewählt sind und n 2, 3, 4 oder 5 beträgt, unter der Voraussetzung, dass mindestens ein Rest von R₃, R₄ und R₅ H und mindestens ein Rest von R₃, R₄ und R₅ R₂C(O)- bedeuten, ein oder mehrere Tenside und Wasser enthält, wobei die Dispersion einen pH-Wert von 5 bis 8 besitzt und die Polyaminoamide durch Reaktion von einer oder mehreren Fettsäuren mit einem oder mehreren Polyaminen der Formel
H₂N-(R₁N)ₙ-H
worin R₁ C₂-C₄-Alkylen und n 2, 3, 4 oder 5 bedeuten, hergestellt sind.

2. Wässrige Dispersion nach Anspruch 1, bei der mindestens zwei Reste von R₃, R₄ und R₅ H und mindestens ein Rest von R₃, R₄ und R₅ R₂C(O)- bedeuten.

3. Wässrige Dispersion nach Anspruch 1 oder 2, bei der das Polyaminoamid durch Reaktion von zwei Molaräquivalenten der Fettsäuren mit einem Molaräquivalent der Polyamine hergestellt ist.

4. Wässrige Dispersion nach Anspruch 1, 2 oder 3, bei der die Polyamine aus Diethylentriamin, Triethylentetramin, Tetraethylenpentamin und Pentaethylenhexamin ausgewählt sind.

5. Wässrige Dispersion nach einem der Ansprüche 1 bis 4, bei der die Fettsäure aus Behensäure, Stearinsäure, Myristinsäure und Oleinsäure ausgewählt ist.

6. Wässrige Dispersion nach einem der vorangehenden Ansprüche, bei der das Polyamin Triethylentetramin und die Fettsäure Stearinsäure sind.

7. Wässrige Dispersion nach einem der vorangehenden Ansprüche, bei der die Tenside eine Polyoxyethylengruppe als polare Gruppe enthalten und einen HLB-Wert von 11 bis 16 besitzen.

8. Wässrige Dispersion nach einem der Ansprüche 1 bis 6, bei der das Tensid Talgaminethoxylat ist.

9. Verfahren zum Erhöhen der Opazität, der Rohdichte oder der Weiße in einem Papierbogen durch Zusetzen der wässrigen Dispersion nach einem der vorangehenden Ansprüche zu einem Pulpebrei von Zellulosefasern und Formen des Breis zu dem Papierbogen.

## Revendications

1. Dispersion aqueuse comprenant un ou plusieurs poly(aminoamides), dans laquelle le poly(aminoamide) a la formule 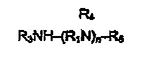 dans laquelle R₂ est la chaîne latérale hydrocarbonée d'un acide gras saturé ou insaturé; R₃, R₄ et R₅ sont indépendamment choisis à chaque occurrence parmi H et R₂C(O)- et n vaut 2, 3, 4 ou 5, à condition qu'au moins l'un de R₃, R₄ et R₅ soit H et qu'au moins l'un de R₃, R₄ et R₅ soit R₂C(O)-, un ou plusieurs agents tensioactifs et de l'eau, dans laquelle la dispersion a un pH de 5 à 8 et les poly(aminoamides) sont préparés en faisant réagir un ou plusieurs acides gras avec une ou plusieurs poly(amines) de formule 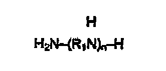 dans laquelle R₁ est un alkylène en C₂ à C₄ et n vaut 2, 3, 4 ou 5.

2. Dispersion aqueuse selon la revendication 1, dans laquelle au moins deux de R₃, R₄ et R₅ sont H et au moins l'un de R₃, R₄ et R₅ est R₂C(O)-.

3. Dispersion aqueuse selon la revendication 1 ou 2, dans laquelle le poly(aminoamide) est préparé en faisant réagir deux équivalents molaires des acides gras avec un équivalent molaire des poly(amines).

4. Dispersion aqueuse selon la revendication 1, 2 ou 3, dans laquelle les poly(amines) sont choisies parmi la diéthylènetriamine, la triéthylènetétramine, la tétraéthylènepentamine et la pentaéthylènehexamine.

5. Dispersion aqueuse selon l'une quelconque des revendications 1 à 4, dans laquelle l'acide gras est choisi parmi l'acide béhénique, l'acide stéarique, l'acide myristique et l'acide oléique.

6. Dispersion aqueuse selon l'une quelconque des revendications précédentes, dans laquelle la poly(amine) est la triéthylènetétramine et l'acide gras est l'acide stéarique.

7. Dispersion aqueuse selon l'une quelconque des revendications précédentes, dans laquelle les agents tensioactifs contiennent un groupe poly(oxyéthylène) comme groupe polaire et ont un HLB de 11 à 16.

8. Dispersion aqueuse selon l'une quelconque des revendications 1 à 6, dans laquelle l'agent tensioactif est l'éthoxylate d'amine de suie (amine de suie éthoxylate).

9. Procédé pour augmenter l'opacité, le bouffant ou la blancheur d'une feuille de papier comprenant l'addition de la dispersion aqueuse selon l'une quelconque des revendications précédentes à une pulpe de fibres de cellulose et la formation de la suspension épaisse en la feuille de papier.
